# EUROPÄISCHE PATENTSCHRIFT

(11) **EP 1 513 903 B1**
(45) Veröffentlichungstag und Bekanntmachung des Hinweises auf die Patenterteilung: **06.09.2006**
(21) Anmeldenummer: 03732525.5
(22) Anmeldetag: 04.06.2003
(51) Int. Cl.: C09D 7/12, D06P 1/52, D06P 5/00, D06Q 1/00, B05D 5/06, B44C 1/00, D06M 23/14

(54) **DRUCK- UND BESCHICHTUNGSZUSAMMENSETZUNGEN ENTHALTEND EXPANDIERBARES POLYSTYROL**
PRINTING AND COATING COMPOSITIONS CONTAINING EXPANDABLE POLYSTYRENE
COMPOSITIONS D'IMPRESSION ET DE REVETEMENT CONTENANT DU POLYSTYRENE EXPANSIBLE

(30) Priorität: 05.06.2002 DE 10224984
(43) Veröffentlichungstag der Anmeldung: 16.03.2005
(73) Patentinhaber: BASF Aktiengesellschaft, 67056 Ludwigshafen (DE)
(72) Erfinder: DURIS, Tibor, 67061 Ludwigshafen (DE); MOSSBACH, Ralf, 67473 Lindenberg (DE); RIETHUES, Michael, 67071 Ludwigshafen (DE); RENZ, Günter, 67251 Freinsheim (DE); JACOB, Dieter, 90556 Cadolzburg (DE)
(74) Vertreter: Isenbruck, Günter
(86) Internationale Anmeldenummer: PCT/EP2003/005844
(87) Internationale Veröffentlichungsnummer: WO 2003/104338

(56) Entgegenhaltungen:
- US-A- 2 862 834
- US-A- 3 515 569
- US-A- 4 194 026

## Beschreibung

Die vorliegende Erfindung die Verwendung von betrifft Druck- und Beschichtungszusammensetzungen enthaltend expandierbares Polystyrol sowie ein Verfahren zur Erzeugung erhabener Texturen auf einem textilen Substrat.

Es ist bekannt, thermisch expandierbare Polymerpartikel in Druck- oder Beschichtungszusammensetzungen einzusetzen, um so auf den bedruckten oder beschichteten Substraten erhabene Texturen zu erzeugen.

US 4,194,026 offenbart ein Verfahren zur Herstellung texturierter flexibler Schaumbeschichtungen für Akustikwände und -decken, bei dem eine vernetzbare, aufgeschäumte Elastomeren-Emulsion, welche bis zu 20 Gew.-% thermisch expandierbare Kunststoffpartikel enthält, gleichmäßig auf Polyurethanschaumteile aufgebracht und erwärmt wird, wodurch die Kunststoffpartikel expandieren und die Elastomeren-Emulsion getrocknet und zu einer texturierten elastomeren Beschichtung vernetzt wird.

JP 54137067 betrifft die Herstellung dekorativer Materialien durch Bedrucken der Materialien mit einer Tinte, die aufschäumbare Kunststoffpartikel enthält. Die Partikel werden mit einem Bindemittel vermischt, aufgedruckt und bei Temperaturen um 150 °C aufgeschäumt. Als zu bedruckende Materialien werden Papiertapeten genannt.

JP 53115779 betrifft beschichtete Polyurethanschäume und deren Herstellung. Der Polyurethanschaum wird dazu mit einer Elastomeren-Emulsion, die schäumbare Polymerteilchen enthält, bestrichen, getrocknet und erhitzt. Durch das Aufschäumen der Teilchen wird eine texturierte Oberfläche gebildet.

JP 11105399 betrifft schäumbare Tinten, die photoaktives Material und thermisch expandierbare Mikrokapseln enthalten, zur Erzeugung geschäumter Bilder. Die Tinte wird im Schablonendruck aufgebracht und anschließend belichtet.

US 4,006,273 offenbart ein Verfahren zur Herstellung eines waschfesten geschäumten Aufdrucks auf einem textilen Substrat, bei dem eine Druckzusammensetzung enthaltend ein filmbildendes, vemetzbares polymeres Bindemittel, ein Lösungsmittel und 1 bis 45 Gew.-% thermoplastische, thermisch expandierbare Mikrokapseln mit einem Durchmesser von 0,5 bis 300 µm auf das Substrat aufgebracht und das so beschichtete Substrat getrocknet und erhitzt wird, wodurch eine erhabene, texturierte Oberfläche erzeugt wird. Als Polymermaterialien für die thermisch expandierten Mikrokapseln werden Polyvinylidenchlorid, Copolymere von Vinylidenchlorid und Acrylnitril, Copolymere von Acrylnitril und Methylacrylat und Copolymere von Methacrylnitril und Methylacrylat genannt.

Aufgabe der Erfindung ist es, weitere Verfahren zur Erzeugung erhabener Texturen auf einem textilen Substrat bereitzustellen.

Gelöst wird die Aufgabe durch ein Verfahren zur Erzeugung erhabener Texturen auf einem Substrat, bei dem eine Druck- oder Beschichtungszusammensetzung enthaltend ein filmbildendes polymeres Bindemittel, thermisch expandierbare Polymerteilchen und gegebenenfalls weitere übliche Additive durch Drucken oder Beschichten auf das Substrat aufgebracht und das bedruckte oder beschichtete Substrat wärmebehandelt wird, dadurch gekennzeichnet, dass die expandierbaren Polymerteilchen gefärbte oder farblose mikrokugelförmige expandierbare Polystyrolteilchen mit einem Teilchendurchmesser im nicht expandiertem Zustand von 0,1 bis 5 mm sind.

Bevorzugte expandierbare Polystyrolteilchen weisen einen Teilchendurchmesser im nicht expandierten Zustand von 0,4 bis 2 mm auf. Ihre Herstellung wird beispielsweise in H. Gausepohl und R. Gellert (Herausgeber), Polystyrol, Becker/Braun Kunststoff Handbuch, Hanser Verlag, beschrieben.

Polystyrol ist leicht verfügbar, preiswert und gut expandierbar.

Die Druck- oder Beschichtungszusammensetzungen können mittels herkömmlicher Textildruck-, Beschichtungs- oder Schaumbeschichtungsverfahren auf das Substrat aufgebracht werden.

Geeignete Textildruckverfahren sind beispielsweise Flach-, Rotations- oder Spezialdruckverfahren.

Geeignete Beschichtungszusammensetzungen können in pastöser oder aufgeschäumter Form als sogenannte Pasten- oder Schaumcompounds eingesetzt werden. Diese können beispielsweise mittels Luft- und Spaltrakeln, Gummituchrakeln, Rotationsschablonen, Transferanlagen, Pflatschwerkeinrichtungen oder Horizontal-Foulards auf das Substrat aufgetragen werden. Geeignete Beschichtungszusammensetzungen können ferner in flüssiger Form eingesetzt und auf das Substrat aufgesprüht werden.

Geeignete Substrate sind textile Substrate.

Beispiele für textile Substrate sind Gewebe, Gewirke und Vliese jeglicher Art, beispielsweise aus Baumwolle, Viskose, Leinen, Wolle, Polyester, Polyamid, Acetat, Triacetat sowie weiteren Synthesefasern.

Das bedruckte bzw. beschichtete Substrat wird anschließend einer Wärmebehandlung unterzogen. Bei der Wärmebehandlung verdunstet Wasser, wird die Beschichtung gegebenenfalls vemetzt und schäumen die expandierbaren mikrokugelförmigen Polystyrolpartikel zu kugelförmigen Schaumpartikeln auf, wodurch sich eine erhabene, texturierte Oberfläche auf dem textilen Substrat ausbildet. Üblicherweise wird die Wärmebehandlung bei 70 bis 140 °C über einen Zeitraum von 20 s bis 20 min durchgeführt. Wird die Wärmebehandlung bei vergleichsweise hoher Temperatur, beispielsweise bei 120 bis 200 °C, durchgeführt, so kann es zum Aufschmelzen der aufgeschäumten Polystyrolteilchen kommen, wobei sich Flecken von geschmolzenem Polystyrol auf dem textilen Substrat bilden.

Gegenstand der vorliegenden Erfindung ist auch die Verwendung von Druckzusammensetzungen für den Textildruck und Beschichtungszusammensetzungen für Schaumbeschichtungen enthaltend
a) 1 bis 99,9 Gew.-%, bevorzugt 8 bis 80 Gew.-% einer wässrigen Dispersion eines filmbildenden polymeren Bindemittels,
b) 0,1 bis 99 Gew.-%, bevorzugt 5 bis 25 Gew.-% weiße oder gefärbte thermisch expandierbare Polystyrolteilchen mit einem Teilchendurchmesser im nicht expandierten Zustand von 0,1 bis 5 mm,
c) 0 bis 98,9 Gew.-%, bevorzugt 0 bis 87 Gew.-% zusätzliches Wasser,
d) 0 bis 98,9 Gew.-%, bevorzugt 0 bis 20 Gew.-% übliche Additive wie Entschäumer, Emulgatoren, Verdickungsmittel, Vernetzer, Farbmittel, Pigmentverteiler, Füllstoffe und Echtheitsverbesserer, zur Erzeugung erhabener Texturen auf einem textilen Substrat.

Übliche wässrige Dispersionen filmbildender polymerer Bindemittel sind beispielsweise wässrige Acrylat-, Butadien-, Vinylacetat- oder Polyurethandispersionen oder wässrige Dispersionen von Copolymeren dieser Monomere. Die wässrigen Dispersionen weisen einen Feststoffgehalt von vorzugsweise 35 bis 60 Gew.-% auf. Neben dem in den eingesetzten wässrigen Dispersionen bereits enthaltenen Wasser können die Druck- und Beschichtungszusammensetzungen zusätzliches Wasser enthalten.

Übliche Vemetzer sind beispielsweise Harnstoff/Formaldehyd- oder Melamin/Formaldehyd-Additionsprodukte. Übliche Vernetzer sind ferner Polyisocyanate.

Übliche Echtheitsverbesserer sind beispielsweise Siliconöle (Polysiloxane) wie Luprimol® SIG und Luprimol® SE.

Übliche Farbmittel (Farbstoffe und Pigmente) sind beispielsweise Helizarin® Pigmentpräparationen.

Geeignete Emulgatoren sind nichtionische oder anionische Tenside, beispielsweise Luprintol@ PE Neu.

Mit den erfindungsgemäßen Druck- und Beschichtungszusammensetzungen ist es möglich, auf textilen Substraten dreidimensionale Strukturen aus Polystyrol zu erzeugen. Mittels Textildruck ist es möglich, die Strukturen in dekorativen Designs aufzubringen. Es ist dabei möglich, sowohl ungefärbte als auch gefärbte expandierbare Polystyrolteilchen einzusetzen, als auch die Beschichtungspasten oder -lösungen einzufärben. So lassen sich unterschiedliche Design-Effekte erzielen. Je nach Temperaturbehandlung sind die Polystyrolteilchen entweder als expandierte, kugelförmige Schaumpartikel oder als geschmolzene Polystyrolflecken auf dem Textil fixiert. Die Waschfestigkeit der Aufdrucke und Beschichtungen ist sehr gut.

Gegenstand der vorliegenden Erfindung ist auch die Verwendung von thermisch expandierbaren Polystyrolteilchen mit einem Teilchendurchmesser im nicht expandierten Zustand von 0,1 bis 5 mm als Zusatz zu Druck- oder Beschichtungszusammensetzungen für textile Substrate.

Nachfolgend werden beispielhaft bevorzugte Druckzusammensetzungen A - J für den Textildruck aufgeführt.

Eine bevorzugte Zusammensetzung A enthält
1 bis 99,9 Gew.-%, insbesondere 4 bis 90 Gew.-% Acrylat-, Butadien-, Vinylacetat- oder Polyurethandispersionen mit einem Feststoffgehalt von 10 bis 70 Gew.-%, beispielsweise Helizarin® Binder TX 4574, als filmbildendes polymeres Bindemittel,
0,1 bis 99 Gew.-%, insbesondere 5 bis 25 Gew.-% weiße oder gefärbte Polystyrolpartikel mit einer Teilchengröße von 0,1 bis 5 mm, beispielsweise styropor® P656,
0 bis 98,9 Gew.-%, insbesondere 0 bis 87 Gew.-% zusätzliches Wasser,
0 bis 1 Gew.-% silikonfreie oder silikonhaltige Entschäumer,
0 bis 6 Gew.-%, insbesondere 0,5 bis 4,5 Gew.-% eines Gemischs aus nichtionischen Tensiden, methoxyliertem Melamin und Siliconöl, beispielsweise Luprintol@ MCL, als Emulgator-Compound,
0 bis 6 Gew.-%, insbesondere 0 bis 4,5 Gew.-% Polyacrylate, beispielsweise Lutexal® HIT, als Verdickungsmittel.

Eine weitere bevorzugte Zusammensetzung B enthält
1 bis 99,9 Gew.-%, insbesondere 8 bis 80 Gew.-% Acrylat-, Butadien-, Vinylacetat- oder Polyurethandispersionen, beispielsweise Helizarin® Binder TX 4574, als filmbildendes polymeres Bindemittel,
0,1 bis 99 Gew.-%, insbesondere 5 bis 25 Gew.-% weiße oder gefärbte Polystyrolpartikel mit einer Teilchengröße von 0,1 bis 5 mm, beispielsweise Styropor@ P656,
0 bis 98,8 Gew.-%, insbesondere 0 bis 87 Gew.-% zusätzliches Wasser,
0 bis 1 Gew.-% silikonfreie oder silikonhaltige Entschäumer,
0,1 bis 2 Gew.-%, insbesondere 0,3 bis 1,5 Gew.-% nichtionische oder anionische Tenside, beispielsweise Luprintol® PE Neu, als Emulgator,
0 bis 4 Gew.-%, insbesondere 0 bis 2,5 Gew.-% Harnstoff/Formaldehyd- oder Melamin/Formaldehyd-Additionsprodukte, beispielsweise Helizarin® Fixierer LF, als Vernetzer,
0 bis 3 Gew.-%, insbesondere 0 bis 1,5 Gew.-% Polysiloxan, beispielsweise Luprimol® SE, als Echtheitsverbesserer,
0 bis 6 Gew.-%, insbesondere 0 bis 4,5 Gew.-% Polyacrylate, beispielsweise Lutexal® HIT, als Verdickungsmittel.

Eine weitere bevorzugte Zusammensetzung C enthält
1 bis 99,9 Gew.-%, insbesondere 8 bis 80 Gew.-% Acrylat-, Butadien-, Vinylacetat- oder Polyurethandispersionen, beispielsweise Helizarin® Binder TX 4574, als filmbildendes polymeres Bindemittel,
0,1 bis 99 Gew.-%, insbesondere 5 bis 25 Gew.-% weiße oder gefärbte Polystyrolpartikel mit einer Teilchengröße von 0,1 bis 5 mm, beispielsweise Styropor@ P656,
0 bis 98,9 Gew.-%, insbesondere 0 bis 87 Gew.-% zusätzliches Wasser,
0 bis 1 Gew.-% silikonfreie oder silikonhaltige Entschäumer,
0 bis 6 Gew.-%, insbesondere 0,5 bis 4,5 Gew.-% eines Gemischs aus nichtionischen Tensiden, methoxyliertem Melamin und Siliconöl, beispielsweise Luprintol® MCL, als Emulgator-Compound,
0 bis 3 Gew.-%, insbesondere 0 bis 1,5 Gew.-% Polysiloxane, beispielsweise Luprimol® SE, als Echtheitsverbesserer,
0 bis 10 Gew.-%, insbesondere 0 bis 8,5 Gew.-% Polyisocyanate, beispielsweise Astazin® Härter CN, als Vernetzer,
0 bis 6 Gew.-%, insbesondere 0 bis 4,5 Gew.-% Polyacrylate, beispielsweise Lutexal® HIT, als Verdickungsmittel.

Eine weitere bevorzugte Zusammensetzung D enthält
1 bis 99,9 Gew.-%, insbesondere 8 bis 80 Gew.-% Acrylat-, Butadien-, Vinylacetat- oder Polyurethandispersionen, beispielsweise Helizarin® Binder TX 4574, als filmbildendes polymeres Bindemittel,
0,1 bis 99 Gew.-%, insbesondere 5 bis 25 Gew.-% weiße oder gefärbte Polystyrolpartikel mit einer Teilchengröße von 0,1 bis 5 mm, beispielsweise Styropor® P656,
0 bis 98,9 Gew.-%, insbesondere 0 bis 87 Gew.-% zusätzliches Wasser,
0 bis 1 Gew.-% silikonfreie oder silikonhaltige Entschäumer,
0 bis 2 Gew.-%, insbesondere 0,3 bis 1,5Gew.-% nichtionische oder anionische Tenside, beispielsweise Luprintol® PE Neu, als Emulgator,
0 bis 3 Gew.-%, insbesondere 0 bis 1,5 Gew-% Polysiloxane, beispielsweise Luprimol® SE, als Echtheitsverbesserer,
0 bis 10 Gew.-%, insbesondere 0 bis 8,5 Gew.-% Polyisocyanate, beispielsweise Astazin® Härter CN, als Vernetzer,
0 bis 6 Gew.-%, insbesondere 0 bis 4,5 Gew.-% Polyacrylate, beispielsweise Lutexal® HIT, als Verdickungsmittel.

Eine weitere bevorzugte Zusammensetzung E enthält
1 bis 99,9 Gew.-%, insbesondere 8 bis 80 Gew.-% Acrylat-, Butadien-, Vinylacetat- oder Polyurethandispersionen, beispielsweise Helizarin® Binder TX 4574, als filmbildendes polymeres Bindemittel,
0,1 bis 99 Gew.-%, insbesondere 5 bis 25 Gew.-% weiße oder gefärbte Polystyrolpartikel mit einer Teilchengröße von 0,1 bis 5 mm, beispielsweise Styropor® P656,
0 bis 98,9 Gew.-%, insbesondere 0 bis 87 Gew.-% zusätzliches Wasser,
0 bis 1 Gew.-% silikonfreie oder silikonhaltige Entschäumer,
0 bis 6 Gew.-%, insbesondere 0,5 bis 4,5 Gew.-% eines Gemischs aus nichtionischen Tensiden, methoxyliertem Melamin und Siliconöl, beispielsweise Luprintol® MCL, als Emulgator-Compound,
0 bis 70 Gew.-%, insbesondere 0 bis 10 Gew.-% Pigmentpräparation, beispielsweise Helizarin® Pigment,
0 bis 6 Gew.-%, insbesondere 0 bis 4,5 Gew.-% Polyacrylate, beispielsweise Lutexal® HIT, als Verdickungsmittel.

Eine weitere bevorzugte Zusammensetzung F enthält
1 bis 99,9 Gew.-%, insbesondere 8 bis 80 Gew.-% Acrylat-, Butadien-, Vinylacetat- oder Polyurethandispersionen, beispielsweise Helizarin® Binder TX 4574, als filmbildendes polymeres Bindemittel,
0,1 bis 99 Gew.-%, insbesondere 0 bis 87 Gew.-% weiße oder gefärbte Polystyrolpartikel mit einer Teilchengröße von 0,1 bis 5 mm, beispielsweise styropor® P656,
0 bis 98,9 Gew.-%, bevorzugt 0 bis 87 Gew.-% zusätzliches Wasser,
0 bis 1 Gew.-% silikonfreie oder silikonhaltige Entschäumer,
0 bis 2 Gew.-%, insbesondere 0,3 bis 1,5 Gew.-% nichtionische oder anionische Tenside, beispielsweise Luprintol@ PE Neu, als Emulgator,
0 bis 4 Gew.-%, insbesondere 0 bis 2,5 Gew.-% Harnstoff/Formaldehyd- oder Melamin/Formaldehyd-Additionsprodukte, beispielsweise Helizarin® Fixierer LF, als Vernetzer,
0 bis 3 Gew.-%, insbesondere 0 bis 1,5 Gew.-% Polysiloxane, beispielsweise Luprimol® SE, als Echtheitsverbesserer,
0 bis 70 Gew.-% insbesondere 0 bis 10 Gew.-% Pigmentpräparation, beispielsweise Helizarin® Pigment,
0 bis 6 Gew.-%, insbesondere 0 bis 4,5 Gew.-% Polyacrylate, beispielsweise Lutexal® HIT, als Verdickungsmittel.

Eine weitere bevorzugte Zusammensetzung G enthält
1 bis 99 Gew.-%, insbesondere 8 bis 80 Gew.-% Acrylat-, Butadien-, Vinylacetat- oder Polyurethandispersionen, beispielsweise Helizarin® Binder TX 4574, als filmbildendes polymeres Bindemittel,
0,1 bis 99 Gew.-%, insbesondere 5 bis 25 Gew.-% weiße oder gefärbte Polystyrolpartikel mit einer Teilchengröße von 0,1 bis 5 mm, beispielsweise Styropor@ P656,
0 bis 98,9 Gew.-%, insbesondere 0 bis 87 Gew.-% zusätzliches Wasser,
0 bis 1 Gew.-% silikonfreie oder silikonhaltige Entschäumer,
0 bis 6 Gew.-%, insbesondere 0,5 bis 4,5 Gew.-% eines Gemischs aus nichtionischen Tensiden, methoxyliertem Melamin und Siliconöl, beispielsweise Luprintol@ MCL, als Emulgator-Comound,
0 bis 3 Gew.-%, insbesondere 0 bis 1,5 Gew.-% Polysiloxane, beispielsweise Luprimol® SE, als Echtheitsverbesserer,
0 bis 10 Gew.-%, insbesondere 0 bis 8,5 Gew.-% Polyisocyanate, beispielsweise Astazin® Härter CN, als Vernetzer,
0 bis 70 Gew.-%, insbesondere 0 bis 10 Gew.-% Pigmentpräparation, beispielsweise Helizarin® Pigment,
0 bis 6 Gew.-%, insbesondere 0 bis 4,5 Gew.-% Polyacrylate, beispielsweise Lutexal® HIT, als Verdickungsmittel.

Eine weitere bevorzugte Zusammensetzung H enthält
1 bis 99,9 Gew.-%, insbesondere 8 bis 80 Gew.-% Acrylat-, Butadien-, Vinylacetat- oder Polyurethandispersionen, beispielsweise Helizarin® Binder TX 4574, als filmbildendes polymeres Bindemittel,
0,1 bis 99 Gew.-%, insbesondere 5 bis 25 Gew.-% weiße oder gefärbte Polystyrolpartikel mit einer Teilchengröße von 0,1 bis 5 mm, beispielsweise Styropor@ P656,
0 bis 98,9 Gew.-%, insbesondere 0 bis 87 Gew.-% zusätzliches Wasser,
0 bis 1 Gew.-% silikonfreie oder silikonhaltige Entschäumer,
0,1 bis 2 Gew.-%, insbesondere 0,3 bis 1,5 Gew.-% nichtionische oder anionische Tenside, beispielsweise Luprintol® PE Neu, als Emulgator,
0 bis 3 Gew.-%, insbesondere 0,3 bis 1,5 Gew.-% Polysiloxane, beispielsweise Luprimol® SE, als Echtheitsverbesserer,
0 bis 10 Gew.-%, insbesondere 0 bis 8,5 Gew.-% Polyisocyanate, beispielsweise Astazin® Härter CN, als Vernetzer,
0 bis 70 Gew.-%, insbesondere 0 bis 10 Gew.-% Pigmentpräparation, beispielsweise Helizarin® Pigment,
0 bis 6 Gew.-%, insbesondere 0 bis 4,5 Gew.-% Polyacrylate, beispielsweise Lutexal® HIT, als Verdickungsmittel.

Nachfolgend werden beispielhaft bevorzugte Beschichtungszusammensetzungen I und J zur Schaumbeschichtung aufgeführt.

Eine bevorzugte Zusammensetzung I enthält
1 bis 99,9 Gew.-%, insbesondere 8 bis 80 Gew.-% Acrylat-, Butadien-, Vinylacetat- oder Polyurethandispersionen, beispielsweise Helizarin® Binder TX 4624 oder 4574, als filmbildendes polymeres Bindemittel,
0,1 bis 99 Gew.-%, insbesondere 5 bis 25 Gew.-% weiße oder gefärbte Polystyrolpartikel mit einer Teilchengröße von 0,1 bis 5 mm, beispielsweise Styropor® P656,
0 bis 98,9 Gew.-%, insbesondere 0 bis 87 Gew.-% zusätzliches Wasser,
0 bis 1 Gew.-%, insbesondere 0 bis 0,5 Gew.-% 25 gew.-%iges Ammoniakwasser,
0 bis 2 Gew.-%, insbesondere 0 bis 1 Gew.-% Harnstoff/Formaldehyd- oder Melamin/Formaldehyd-Additionsprodukt, beispielsweise Saduren® 163, als Vernetzer,
0 bis 1 Gew.-%, insbesondere 0 bis 0,5 Gew.-% Polyphosphat, Natrium- oder Ammoniumpolyacrylat, beispielsweise Pigmentverteiler® A, als Dispergiermittel,
0 bis 30 Gew.-%, insbesondere 0 bis 15 Gew.-% Magnesium- oder Aluminiumsilikat, beispielsweise Talkum® IT Star 20, als Füllstoff,
0 bis 5 Gew.-%, insbesondere 0 bis 3 Gew.-% Fettsäureester, Kalium- oder Ammoniumstearat, beispielsweise C&S-Stabsol®, als Schaumstabilisator,
0 bis 30 Gew.-% Polyacrylate, beispielsweise Latekoll® D oder Lutexal HIT, als Verdickungsmittel.

Der pH-Wert der Zusammensetzung I beträgt vorzugsweise 9 bis 9,5. Ihre Viskosität, gemessen mit einem Haake VT02, Spindel 1, liegt vorzugsweise im Bereich von 20 bis 45 dPa x s.

Eine weitere bevorzugte Zusammensetzung J enthält
1 bis 99,9 Gew.-%, insbesondere 8 bis 80 Gew.-% Acrylat-, Butadien-, Vinylacetat- oder Polyurethandispersionen, beispielsweise Helizarin® Binder TX 4624 oder 4574, als filmbildendes polymeres Bindemittel,
0,1 bis 99 Gew.-%, insbesondere 5 bis 25 Gew.-% weiße oder gefärbte Polystyrolpartikel mit einer Teilchengröße von 0,1 bis 5 mm, beispielsweise Styropor@ P656,
0 bis 98,9 Gew.-%, insbesondere 0 bis 87 Gew.-% Wasser,
0 bis 1 Gew.-%, insbesondere 0 bis 0,5 Gew.-% 25 gew.-%iges Ammoniakwasser,
0 bis 2 Gew.-%, insbesondere 0 bis 1 Gew.-% Harnstoff/Formaldehyd- oder Melamin/Formaldehyd-Additionsprodukt, beispielsweise Saduren® 163, als Vernetzer,
0 bis 1 Gew.-%, insbesondere 0 bis 0,5 Gew.-% Polyphosphat, Natrium- oder Ammoniumpolyacrylat, beispielsweise Pigmentverteiler® A, als Dispergiermittel,
0 bis 30 Gew.-%, insbesondere 0 bis 15 Gew.-% Magnesium- oder Aluminiumsilikat, beispielsweise Talkum® IT Star 20, als Füllstoff,
0 bis 70 Gew.-%, insbesondere 0 bis 10 Gew.-% Pigmentpräparation, beispielsweise Helizarin®,
0 bis 5 Gew.-%, insbesondere 0 bis 3 Gew.-% Fettsäureester, Kalium- oder Ammoniumstearat, beispielsweise C&S-Stabsol®, als Schaumstabilisator,
0 bis 30 Gew.-% Polyacrylate, beispielsweise Latekoll® D, als Verdickungsmittel.

Der pH-Wert der Zusammensetzung J beträgt vorzugsweise 9 bis 9,5, ihre Viskosität, gemessen mit einem Haake VT02, Spindel 1, liegt vorzugsweise im Bereich von 20 bis 45 dPa x s und ihre Schaumdichte liegt vorzugsweise im Bereich von 200 bis 600 g/l. Die Zusammensetzung J wird vorzugsweise mittels eines Spaltrakels appliziert und beispielsweise bei 100 °C getrocknet und bei 130 °C ungefähr 1 min expandiert.

## Patentansprüche

1. Verfahren zur Erzeugung erhabener Texturen auf einem textilen Substrat, bei dem eine Druck- oder Beschichtungszusammensetzung enthaltend ein filmbildendes polymeres Bindemittel, ein Lösungsmittel, thermisch expandierbare Polymerteilchen und gegebenenfalls weitere übliche Additive durch Drucken oder Beschichten auf das Substrat aufgebracht und das bedruckte oder beschichtete textile Substrat wärmebehandelt wird, wodurch die expandierbaren Polymerteilchen zu kugelförmigen Schaumpartikeln aufschäumen und sich eine erhabene, texturierte Oberfläche auf dem textilen Substrat ausbildet, **dadurch gekennzeichnet, dass** die expandierbaren Polymerteilchen gefärbte oder farblose mikrokugelförmige expandierbare Polystyrolteilchen mit einem Teilchendurchmesser im nicht expandierten Zustand von 0,1 bis 5 mm sind.

2. Verwendung von Druck- oder Beschichtungszusammensetzungen enthaltend
a) 1 bis 99,9 Gew.-% einer wässrigen Dispersion eines filmbildenden polymeren Bindemittels,
b) 0,1 bis 99 Gew.-% thermisch expandierbare Polystyrolteilchen mit einem Teilchendurchmesser im nicht expandierten Zustand von 0,1 bis 5 mm,
c) 0 bis 98,9 Gew.-% zusätzliches Wasser,
d) 0 bis 98,9 Gew.-% übliche Additive wie Entschäumer, Emulgatoren, Verdickungsmittel, Vernetzer, Farbmittel, Pigmentverteiler, Dispergiermittel und Füllstoffe,
zur Erzeugung erhabener Texturen auf einem textilen Substrat.

3. Verwendung nach Anspruch 2, **dadurch gekennzeichnet, dass** die wässrige Dispersion des filmbildenden polymeren Bindemittels eine wässrige Acrylat-, Butadien-, Vinylacetat oder Polyurethandispersion oder wässrige Dispersion von Copolymeren der genannten Monomeren ist.

## Claims

1. A process for generating raised textures on a textile substrate, in which a printing or coating composition comprising a film-forming polymeric binder, a solvent, heat-expandable polymer particles, and, if appropriate, other usual additives is applied to the substrate by printing or coating, and the printed or coated textile substrate is heat-treated, the result being that the expandable polymer particles foam to give foam beads and that a raised, textured surface forms on the textile substrate which comprises using expandable polymer particles which are colored or colorless expandable polystyrene microbeads whose diameter in the unexpanded state is from 0.1 to 5 mm.

2. The use of compositions intended for printing or coating and comprising
a) from 1 to 99.9% by weight of an aqueous dispersion of a film-forming polymeric binder,
b) from 0.1 to 99% by weight of heat-expandable polystyrene particles whose diameter in the unexpanded state is from 0.1 to 5 mm,
c) from 0 to 98.9% by weight of added water, and
d) from 0 to 98.9% by weight of usual additives, such as antifoams, emulsifiers, thickeners, crosslinkers, colorants, pigment dispersers, dispersing agents, and fillers,
for generating raised textures on a textile substrate.

3. The use according to claim 2, wherein the aqueous dispersion of the film-forming polymeric binder is an aqueous dispersion of acrylate, of butadiene, of vinyl acetate, or of polyurethane, or is an aqueous dispersion of copolymers of the monomers mentioned.

## Revendications

1. Procédé de production de textures en relief sur un substrat textile, dans lequel une composition d'impression ou de revêtement contenant un liant polymère filmogène, un solvant, des particules de polymère thermiquement expansible et éventuellement d'autres additifs courants est appliquée sur le substrat par impression ou enduction et le substrat textile imprimé ou enduit est traité thermiquement, ce qui permet un moussage des particules de polymère expansible en particules de mousse de forme sphérique et la réalisation d'une surface texturée en relief sur le substrat textile, **caractérisé en ce que** les particules de polymère expansible sont des particules de polystyrène expansible, microsphériques, colorées ou incolores, présentant un diamètre de particule à l'état non expansé de 0,1 à 5 mm.

2. Utilisation de compositions d'impression ou d'enduction contenant
a) 1 à 99,9 % en poids d'une dispersion aqueuse d'un liant polymère filmogène,
b) 0,1 à 99 % en poids de particules de polystyrène thermiquement expansible, présentant un diamètre de particule à l'état non expansé de 0,1 à 5 mm,
c) 0 à 98,9 % en poids d'eau additionnelle,
d) 0 à 98,9 % en poids d'additifs courants, tels que des agents antimousse, des agents émulsionnants, des épaississants, des agents de réticulation, des colorants, des agents de répartition de pigment, des dispersants et des charges,
pour la production de textures en relief sur un substrat textile.

3. Utilisation suivant la revendication 2, **caractérisée en ce que** la dispersion aqueuse du liant polymère filmogène est une dispersion aqueuse d'acrylate, de butadiène, d'acétate de vinyle ou de polyuréthanne ou une dispersion aqueuse de copolymères des monomères cités.
